Europäisches Patentamt

European Patent Office

Office européen des brevets

(19)

(11) Numéro de publication: **0 323 308**
**A1**

## (12) DEMANDE DE BREVET EUROPEEN

(21) Numéro de dépôt: 88403222.8

(22) Date de dépôt: 16.12.88

(51) Int. Cl.⁴: **B 60 G 3/20**

(30) Priorité: 29.12.87 FR 8718271

(43) Date de publication de la demande:
05.07.89 Bulletin 89/27

(84) Etats contractants désignés: **DE ES IT**

(71) Demandeur: **REGIE NATIONALE DES USINES RENAULT**
**Boîte postale 103 8-10 avenue Emile Zola**
**F-92109 Boulogne-Billancourt (FR)**

(72) Inventeur: **Veneau, Jean**
**21, Domaine de la Côte Noire**
**F-92500 Rueil-Malmaison (FR)**

(54) Suspension pour vehicules automobiles.

(57) Suspension pour véhicules automobiles, du type Mac PHERSON comprenant un porte-fusée (1) relié à deux biellettes transversales (3-20), à un tirant longitudinal (21) et à un amortisseur (6).

On donne à la biellette (20), du côté de son articulation (B) au porte-fusée (1) un changement d'orientation par rapport à sa partie fixée à la caisse d'un angle α calculé pour que le point lo de rencontre de son prolongement avec celui de la biellette (3) se trouve à proximité du plan de la roue (2), le point de changement d'orientation (23) de la biellette (20) constituant l'articulation d'une extrémité du tirant longitudinal (21) dont l'autre est fixée à la caisse (9).

FIG.2

EP 0 323 308 A1

Bundesdruckerei Berlin

**Description**

## SUSPENSION POUR VEHICULES AUTOMOBILES

La présente invention se rapporte à une suspension pour véhicules automobiles, plus particulièrement pour ceux qui comportent quatre roues motrices.

Dans le cas d'un train arrière du type Mac PHERSON ou à double triangle, sa structure inférieure est généralement constituée d'un tirant longitudinal et de deux biellettes transversales reliés par l'une de leurs extrémités au porte-fusée et par leur extrémité opposée à la caisse du véhicule. L'optimisation de cette suspension implique une hauteur de points de fixation et une orientation des biellettes bien déterminées, faute de quoi les propriétés de tenue de route, en particulier dans les virages, ou de conservation de l'assiette lors du freinage sont dégradées.

Malheureusement, la nécessité de loger la transmission dans le volume occupé par les éléments ci-dessus implique une désorganisation de l'agencement antérieur avec les conséquences évoquées ci-dessus.

L'objet de la présente invention a pour but de pallier les difficultés qui résultent de l'application de la motricité du train arrière à une suspension à roues indépendantes.

La structure de la suspension selon l'invention sera décrite au regard des figures 1 à 4 ci-jointes, qui se rapportent respectivement et de façon schématique.

- La figure 1 à une vue en plan d'un train arrière selon l'état de la technique antérieure ;

- La figure 2 à une vue analogue d'un train selon l'invention ;

- La figure 3 à une vue analogue d'une variante de l'invention ;

- La figure 4 à une vue de détail d'un élément du train précédent.

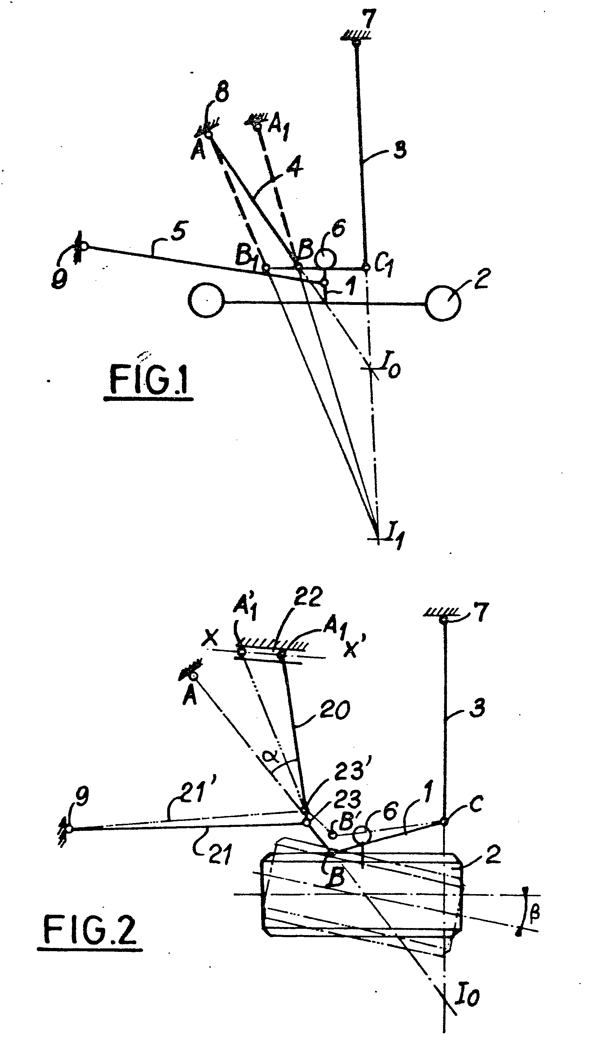

Considérons la suspension selon l'état antérieur de la technique illustré à la figure 1 correspondant à un train arrière non moteur.

Le porte-fusée 1 supportant la roue 2 est le siège de la fixation d'une extrémité de deux biellettes transversales 3 et 4, d'un tirant longitudinal 5 et d'un amortisseur 6 dont les extrémités opposées sont solidaires de la caisse, respectivement en 7, 8 et 9.

Le point Io de rencontre du prolongement des biellettes 3, 4 détermine la valeur de l'effet de pince que l'on veut attribuer à la roue 2 lorsque le véhicule freine. Cette convergence du plan de roue vers l'axe médian du véhicule détermine son comportement sous-vireur et participe à sa tenue de route et à sa stabilité au freinage. Si lesdites biellettes étaient parallèles, le point I serait rejeté à l'infini et le véhicule n'aurait aucune caractéristique sous-vireuse favorable.

Pour un véhicule donné, le point I du train se trouve en une position optimale Io. Si l'on doit modifier la géométrie du train pour inclure une transmission, il faut espacer les biellettes 3, 4, le point d'ancrage B de la biellette 4 sur le porte-fusée 1 se retrouvant alors en B1. On voit que Io est rejeté en I1, ce qui entraîne un changement défavorable des caractéristiques du train et, en particulier, une diminution de son effet de pince au freinage.

On aboutit au même résultat si l'on fait passer le point d'ancrage de la biellette 4 à la caisse de A en A1, dans le but de gagner de la place en avant de l'essieu arrière.

Par ailleurs, on ne peut pas disposer les points d'ancrage B, C des biellettes 3-4 au porte-fusée au-dessus de la transmission car, ce faisant, on changerait les caractéristiques du train et le débattement des roues sur un obstacle impliquerait un volume trop important au niveau du passage de roue dans la caisse.

On ne peut pas non plus abaisser le point d'ancrage B, C des biellettes 3-4 en dessous de la transmission, car dans ce cas la garde au sol de l'attache du tirant 5 au porte-fusée serait trop faible et ne respecterait plus les normes de sécurité.

Une première réalisation du train suivant l'invention, illustrée à la figure 2, permet de conserver le point Io à sa place et donc les caractéristiques de pinces du train recherchées tout en écartant les points d'ancrage sur le porte-fusée 1 des biellettes 3-4 pour permettre d'implanter une transmission et simultanément de reculer de A en A1 l'ancrage de la biellette 4 à la caisse pour gagner de la place.

Comme dans le cas de la figure 1, le porte-fusée 1 sert de support à la roue 2 à l'extrémité de la biellette postérieure 3 dont l'autre est solidaire en 7 à la caisse, ainsi qu'à l'amortisseur 6.

La biellette antérieure 20 est fixée en B au porte fusée mais comporte un changement de direction d'un angle $\alpha$ tel que sa projection virtuelle A sur la caisse se trouve en réalité reportée en A1. Sa fixation à la caisse en ce point se fait au moyen d'un manchon élastique 22 rigide dans le sens de l'action de la biellette 20 mais souple dans le sens de la flèche selon l'axe X'X légèrement incliné par rapport à l'axe longitudinal du véhicule, ce qui permet d'absorber les chocs longitudinaux de la roue 2.

Au niveau 23 du changement de direction de la biellette 20, se trouve articulée l'une des extrémité d'un tirant 21 dont l'autre est fixée en 9 à la caisse.

En situation de freinage, la structure du train selon l'invention se déforme de la façon suivante.

La force F de freinage de la roue 2 sur la chaussée détermine un déplacement du point A1 (de l'attache de la biellette transversale 20 à la caisse par le manchon élastique 22) en A'1.

Du fait de l'obliquité du manchon, ce mouvement comporte une composante qui détermine le déplacement représenté en traits interrompus du tirant 21 en 21' et du porte-fusée 1 autour du point fixe C, les points B venant en B' et 23 en 23'.

Ce faisant, le plan de roue tourne d'un angle $\beta$ déterminant ainsi l'effet de pince recherché.

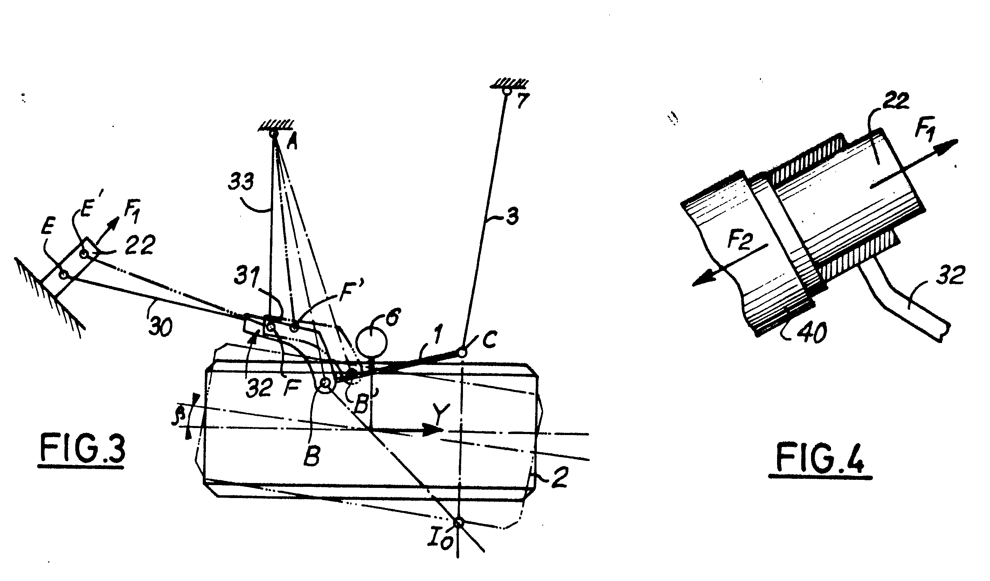

Selon la variante de l'invention représentée à la figure 3, le manchon oblique 22 est disposé à la liaison E du tirant 30 à la caisse. Ce dernier est constitué d'une partie coudée rigide 31 reliée au porte-fusée 1 en un point B et en une lame 32 souple dans un plan horizontal, mais rigide dans son plan vertical, dont l'extrémité libre est fixée au manchon 22 en E.

Une première biellette 33 articulée en F du coude rigide 31 solidarise ce dernier à la caisse en A, la seconde biellette 3 reliant la partie postérieure du porte-fusée 1 à la caisse en 7.

On voit que, comme dans le cas de la figure 2, le point Io déterminant l'effet de pince de la roue 2 est bien déterminé et situé à proximité de cette dernière.

Le détail du manchon oblique 22 est visible à la figure 4. On remarque que le seul déplacement possible dans le sens de l'élasticité dudit manchon peut se faire selon la flèche F1 car dans le sens F2 l'élastomère est en butée contre un élément 40 du châssis.

En situation de freinage, que l'on peut schématiser par une force exercée sur la roue dans le sens de la flèche Y, le point B représentant l'articulation d'attache du tirant 32 au porte-fusée 1 va décrire un arc centré sur l'attache A de la biellette 33 à la caisse, dans le sens trigonométrique, et va reculer en B'. Ce faisant, le point F d'attache de la biellette 33 à l'élément coudé rigide 31 recule également en F' et le point E d'articulation du tirant 32 à la caisse se déplace en E' vers l'intérieur du véhicule.

La résultante de ce changement de géométrie du train selon l'invention détermine l'effet de pince recherché, par rotation du plan de la roue 2 d'un angle $\beta$ dans le sens de la flèche.

Notons encore que la présente structure peut encaisser les chocs longitudinaux de la roue 2 grâce au manchon oblique 22 qui les amortira lors de son déplacement possible selon son axe F1.

Par ailleurs, en virage à droite, un effort transversal Z s'exerce sur la fusée de roue. Sa transmission au point B induit une flexion de la lame 30, ce qui détermine une rotation du tirant 32 autour du point F, garantissant également l'effet de pince recherché.

**Revendications**

1- Suspension pour véhicules automobiles, du type Mac PHERSON ou double triangle, particulièrement adaptée à un train arrière comportant des roues motrices, comprenant un porte-fusée (1) relié à deux biellettes transversales (3-20), à un tirant longitudinal (21) et à un amortisseur (6), caractérisée par le fait que l'on donne à la biellette (20), du côté de son articulation (B) au porte-fusée (1) un changement d'orientation par rapport à sa partie fixée à la caisse d'un angle $\alpha$ calculé pour que le point Io de rencontre de son prolongement avec celui de la biellette (3) se trouve à proximité du plan de la roue (2), ce qui détermine un effet de pince favorable à cette dernière en situation de freinage, le point de changement d'orientation (23) de la biellete (20) constituant l'articulation d'une extrémité du tirant longitudinal (21) dont l'autre est fixée à la caisse (9).

2 - Suspension selon la revendication 1 caractérisée en ce que la fixation à la caisse de la biellette (20) s'effectue au moyen d'un manchon souple (22), légèrement incliné par rapport à l'axe longitudinal du véhicule, rigide dans le sens de l'action de la biellette (20) mais déformable selon son axe longitudinal X'X.

3 - Suspension pour véhicules automobiles du type comprenant un tirant (32) longitudinal, deux biellettes transversales (3-33) et un amortisseur (6) caractérisée en ce que le tirant (32) est relié au porte-fusée (1) par une partie coudée rigide (31) et à la caisse par une lame (32) souple dans un plan horizontal mais rigide dans son plan vertical, le point de changement de direction du coude F servant d'articulation à l'une des extrémité de la biellette transversale antérieure (33) dont l'extrémité opposée est fixée à la caisse, la biellette transversale postérieure (3) étant fixée respectivement à l'arrière du porte-fusée (1) et à la caisse.

4 - Suspension selon la revendication (3) caractérisée en ce que la fixation de la partie antérieure du tirant (32) à la caisse se fait au moyen d'un manchon oblique (22) mobile selon son axe longitudinal et suivant la flèche F1 dirigée vers l'axe longitudinal du véhicule, mais pratiquement indéformable dans le sens contraire, suivant F2.

**FIG.1**

**FIG.2**

FIG.3

FIG.4

EP 0 323 308 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | GB-A-2 177 983 (MITSUBISHI) <br> * Page 5, ligne 84 - page 6, ligne 82; page 7, ligne 125 - page 8, ligne 129; figures 9,12,17,18 * | 1 | B 60 G 3/20 |
| A | PATENT ABSTRACTS OF JAPAN, vol. 11, no. 356 (M-644)[2803], 20 novembre 1987, page 74 M 644; & JP-A-62 134 307 (HONDA MOTOR CO., LTD) 17-06-1987 | 2 | |
| A | FR-A-2 552 374 (HONDA) <br> * Page 6, ligne 30 - page 8, ligne 7; page 8, ligne 30 - page 9, ligne 9; figures 7-9,13,14 * | 3 | |
| A | DE-B-1 148 884 (BMW) <br> * Revendication 1 * | 4 | |
| A | US-A-4 650 211 (TANAHASHI) <br> * Colonne 2, lignes 23-42; colonne 22, lignes 14-34; figures 4,5,14 * | 1 | DOMAINES TECHNIQUES RECHERCHES (Int. Cl.4) |
| A | GB-A-2 182 001 (HONDA) <br> * Revendications 1-7 * | 3 | B 60 G |
| A | EP-A-0 136 563 (MAZDA) <br> * Page 14, ligne 22 - page 15, ligne 4; figures 1-5,10 * | 3,4 | |
| P,A | GB-A-2 198 398 (HONDA) <br> * En entier * | 3,4 | |

Le présent rapport a été établi pour toutes les revendications

| Lieu de la recherche | Date d'achèvement de la recherche | Examinateur |
|---|---|---|
| LA HAYE | 21-03-1989 | MEIJS P.C.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant